# EUROPEAN PATENT APPLICATION

(11) **EP 3 029 678 A1**
(43) Date of publication of application: **08.06.2016**
(21) Application number: 14831651.6
(22) Date of filing: 25.04.2014
(51) Int. Cl.: G11B 27/10

(54) **RECORDING METHOD, PLAYING METHOD, DEVICE, TERMINAL AND SYSTEM**

(30) Priority: 30.07.2013 CN 201310326033
(71) Applicant: Xiaomi Inc., Beijing 100085 (CN)
(72) Inventor: HAN, Wei, Beijing 100085 (CN); XU, Lina, Beijing 100085 (CN); WANG, Wenlin, Beijing 100085 (CN)
(74) Representative: Fontenelle, Sandrine
(86) International application number: PCT/CN2014/076271
(87) International publication number: WO 2015/014140

(57) **Abstract**

Disclosed are a recording method, a playing method, a device, a terminal and a system, which belong to the technical field of computers. The recording method comprises: receiving a flag start instruction in the process of recording audio data; according to the flag start instruction, establishing a flag event, and recording a parameter of the flag event, the flag event being used for flagging the audio data; receiving a flag end instruction; according to the flag end instruction, completing the record of the parameter of the flag event, so as to obtain a flag data structure; and storing the audio data and the flag data structure, so as to obtain an audio file. The recording device comprises a first receiving module, a recording module, a second receiving module, a first generation module and a second generation module. The present invention solves the problem of reduction of the information acquisition efficiency caused by a complex operation of searching for the predetermined content in the audio data by means of repeated audition, thereby achieving the effect of improving the information acquisition efficiency.

## Description

This application is based upon and claims priority to Chinese Patent Application No. 201310326033.0, filed on July 30, 2013, the entire contents of which are incorporated herein by reference.

### TECHNICAL FIELD

The present invention relates to the field of computer technologies, and more particularly, to a recording method, a playing method, a device, a terminal and a system.

### BACKGROUND

With the popularity of terminals, the terminals have become indispensable portable electronic devices in daily life, and may record what is happening around us anytime. To enrich the recording scenarios and more vividly reproduce the scenarios, people generally record information via such multimedia manners as recording or photographing. A video file obtained by photographing contains too many valueless images, and such images consume a large amount of the storage space, thereby reducing the information recording efficiency. Therefore, the terminal may record information via recording.

In a typical recording process, a microphone of the terminal is enabled, and voice information in the scenario is collected via the microphone to obtain audio data. At any time after the recording, the voice information in the scenario may be reproduced when the terminal plays the audio data. For example, a user may record, via the microphone, the content of a lecture given by a teacher, and when the terminal plays the audio data, the content of the lecture may be reproduced, so as to facilitate the user's learning.

If the user needs to search for predetermined content in the audio data obtained via recording, for example, examination points in the content of the lecture, the user may adjust the play progress of the audio data to listen to the audio data, and search out the predetermined content via repeated listening. However, the operations of searching for the predetermined content in the audio data via repeated listening are complicated, and thus the information acquisition efficiency is reduced.

### SUMMARY

To solve the problem that the information acquisition efficiency is reduced due to complicated operations of searching for predetermined content in the audio data via repeatedly listening, embodiments of the present invention provide a recording method, a playing method, a device, a terminal and a system. The following technical solutions are employed.

According to a first aspect of the embodiments of the present invention, a recording method is provided. The method includes:
receiving a mark start instruction in a process of recording audio data;
establishing a mark event according to the mark start instruction, and recording a parameter of the mark event, the mark event being used for marking the audio data;
receiving a mark end instruction;
completing recording of the parameter of the mark event according to the mark end instruction to obtain a mark data structure; and
storing the audio data and the mark data structure to obtain an audio file.

According to a second aspect of the embodiments of the present invention, a playing method is provided. The method includes:
acquiring an audio file, the audio file including audio data and at least one mark data structure corresponding to the audio data, the mark data structure being used for recording a parameter of a mark event in a process of recording the audio data, the mark event being used for marking the audio data; and
marking the mark event recorded in the at least one mark data structure in a process of playing the audio data.

According to a third aspect of the embodiments of the present invention, a recording device is provided. The device includes:
a first receiving module, configured to receive a mark start instruction in a process of recording audio data;
a recording module, configured to establish a mark event according to the mark start instruction received by the first receiving module, and record a parameter of the mark event, the mark event being used for marking the audio data;
a second receiving module, configured to receive a mark end instruction after the recording module establishes the mark event according to the mark start instruction and records the parameter of the mark event;
a first generating module, configured to complete recording of the parameter of the mark event according to the mark end instruction received by the second receiving module to obtain a mark data structure; and
a second generating module, configured to store the audio data and the mark data structure generated by the first generating module to obtain an audio file.

According to a fourth aspect of the embodiments of the present invention, a playing device is provided. The device includes:
a second acquiring module, configured to acquire an audio file, the audio file including audio data and at least one mark data structure corresponding to the audio data, the mark data structure being used for recording a parameter of a mark event in a process of recording the audio data, the mark event being used for marking the audio data; and
a marking module, configured to mark the mark event recorded in the at least one mark data structure in a process of playing the audio data acquired by the second acquiring module.

According to a fifth aspect of the embodiments of the present invention, a recording terminal is provided. The recording terminal includes the recording device according to the third aspect of the embodiments of the present invention.

According to a sixth aspect of the embodiments of the present invention, a playing terminal is provided. The playing terminal includes the playing device according to the fourth aspect of the embodiments of the present invention.

According to a seventh aspect of the embodiments of the present invention, an audio system is provided. The system includes the recording terminal according to the fifth aspect of the embodiments of the present invention and the playing terminal according to the sixth aspect of the embodiments of the present invention.

According to an eighth aspect of the embodiments of the present invention, an audio file is provided. The audio file includes audio data and at least one mark data structure corresponding to the audio data, the mark data structure being used for recording a parameter of a mark event corresponding to the audio data, the mark event being used for marking the audio data.

The present invention may achieve the following beneficial effects. By receiving a mark start instruction in a process of recording audio data, establishing a mark event according to the mark start instruction and recording a parameter of the mark event, the mark event being used for marking the audio data; receiving a mark end instruction, completing recording of the parameter of the mark event according to the mark end instruction to obtain a mark data structure, and storing the audio data and the mark data structure to obtain an audio file, the problem that the information acquisition efficiency is reduced due to complicated operations of searching for predetermined content in the audio data via repeatedly listening is solved, and the effect of improving the information acquisition efficiency is achieved.

It shall be appreciated that the above general description and the detailed description hereinafter are only illustrative, but not for limiting the present invention.

### BRIEF DESCRIPTION OF THE DRAWINGS

To clearly describe technical solutions of embodiments of the present invention, drawings that are to be referred for description of the embodiments are briefly described hereinafter. Apparently, the drawings described hereinafter merely illustrate some embodiments of the present invention. Persons of ordinary skill in the art may also derive other drawings based on the drawings described herein without any creative effort.
FIG. 1 is an exemplary flowchart illustrating a recording method according to an embodiment of the present invention;
FIG. 2 is an exemplary flowchart illustrating a recording method according to another embodiment of the present invention;
FIG. 3 is an exemplary flowchart illustrating a playing method according to an embodiment of the present invention;
FIG. 4 is an exemplary flowchart illustrating a playing method according to another embodiment of the present invention;
FIG. 5 is an exemplary flowchart illustrating a playing method according to still another embodiment of the present invention;
FIG. 6 is an exemplary structural block diagram illustrating a recording device according to an embodiment of the present invention;
FIG. 7 is an exemplary structural block diagram illustrating a recording device according to another embodiment of the present invention;
FIG. 8 is an exemplary structural block diagram illustrating a playing device according to an embodiment of the present invention;
FIG. 9 is an exemplary structural block diagram illustrating a playing device according to another embodiment of the present invention;
FIG. 10 is an exemplary structural block diagram illustrating a playing device according to still another embodiment of the present invention;
FIG. 11 is an exemplary structural block diagram illustrating a terminal according to an embodiment of the present invention; and
FIG. 12 is an exemplary structural block diagram illustrating an audio system according to an embodiment of the present invention.

The above drawings are used for illustrating the embodiments of the present invention, and more details will be given hereinafter. These drawings and textual descriptions are not intended to limit the scope defined in the present invention in any way, but intended to describe the inventive concept of the present invention, through specific embodiments, for a person skilled in the art.

### DETAILED DESCRIPTION

To make the objectives, technical solutions, and advantages of the present invention clearer, embodiments of the present invention are described hereinafter in detail with reference to the attached drawings.

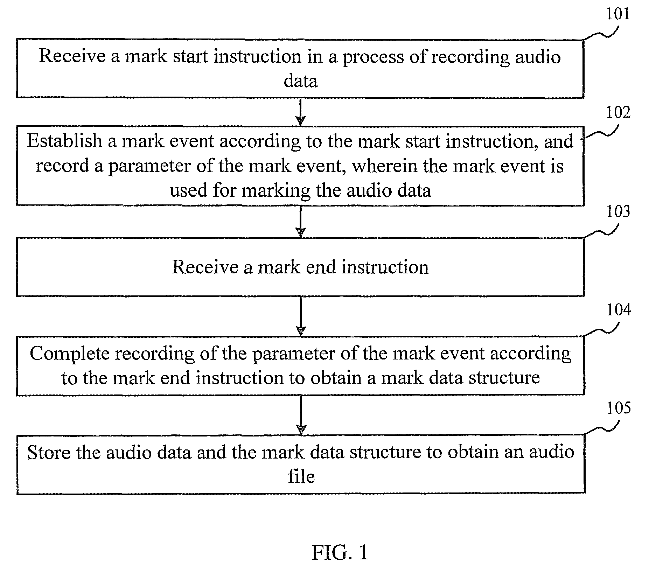

Referring to FIG. 1, a flowchart illustrating a recording method according to an embodiment of the present invention is given. The recording method may be applied to a recording terminal. The recording terminal may be a smart TV, a smart phone, a tablet computer, or the like. The recording method includes the following steps.

In step 101, a mark start instruction is received in a process of recording audio data.

The audio data refers to data acquired by collecting voice information in a scenario. The mark start instruction is used for triggering marking of the audio data, and may be triggered by a user or automatically triggered by the terminal. This embodiment sets no limitation to the manner of triggering the mark start instruction.

In step 102, a mark event is established according to the mark start instruction, and a parameter of the mark event is recorded, wherein the mark event is used for marking the audio data.

The recording terminal may trigger establishment of a mark event according to the received mark start instruction. The mark event is used for marking the audio data, such that the audio data is searched via a mark. For example, a certain audio segment in the audio data is marked.

In step 103, a mark end instruction is received.

The mark end instruction is used for triggering ending of the mark event, and may be triggered by a user or automatically triggered by the terminal. This embodiment sets no limitation to the manner of triggering the mark end instruction.

In step 104, recording of the parameter of the mark event is completed according to the mark end instruction to obtain a mark data structure.

A recording terminal ends establishment of the mark event according to the received mark end instruction, and completes recording of the acquired parameter of the mark event, wherein the mark event has at least one parameter.

At least one mark event is established. Therefore, the recording terminal may store the parameter using the parameter name as an index during storing of the parameter of the mark event, that is, the same type parameters of all the mark events are stored in one directory. In an embodiment, to facilitate searching of the parameter of the mark event and improve the loading efficiency of the mark event, the recording terminal may store the parameter using the mark event as an index, that is, all the parameters of the same mark event are stored in one directory. In this way, the mark data structure may be obtained.

In step 105, the audio data and the mark data structure are stored to obtain an audio file.

The recording terminal may store the audio data and the mark data structure together. Alternatively, in an embodiment, the terminal may separately store the audio data and the mark data structure, such that data in the same structure is managed conveniently. However, this embodiment sets no limitation to the manner of storing the audio data and the mark data structure.

After storing the mark data structure, the recording terminal continues detecting whether a mark start instruction is received. If another mark start instruction is received, the recording terminal continues establishing a mark event. Therefore, an audio file includes audio date obtained by recording and at least one mark data structure obtained in the process of recording the audio data, wherein the mark data structure one-to-one corresponds to the mark event.

In conclusion, according to the recording method provided in the embodiments of the present invention, a mark start instruction is received in a process of recording audio data, a mark event is established according to the mark start instruction and a parameter of the mark event is recorded, wherein the mark event is used for marking the audio data; a mark end instruction is received, recording of the parameter of the mark event is completed according to the mark end instruction to obtain a mark data structure, and the audio data and the mark data structure are stored to obtain an audio file. In this way, the problem that the information acquisition efficiency is reduced due to complicated operations of searching for predetermined content in the audio data via repeatedly listening is solved, and the effect of improving the information acquisition efficiency is achieved.

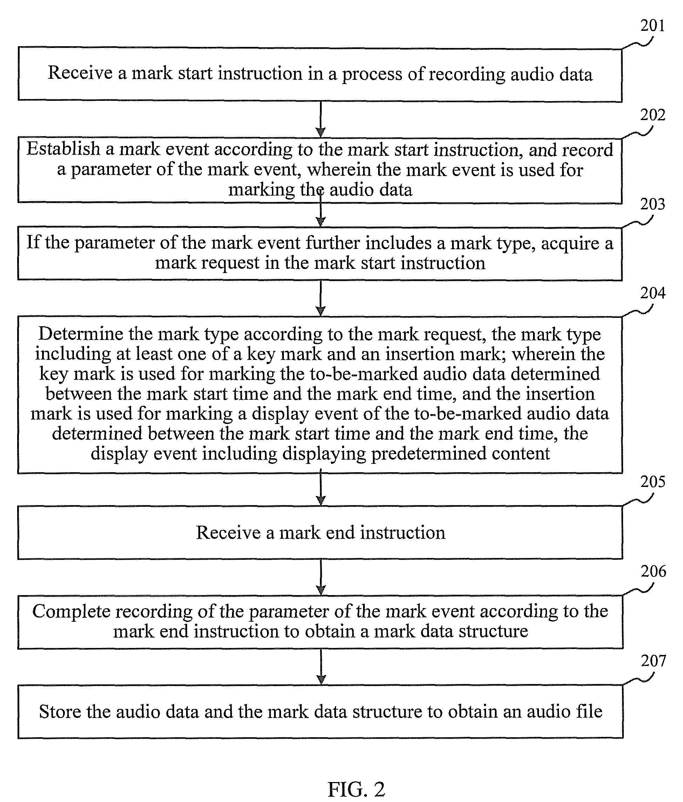

Referring to FIG. 2, a flowchart illustrating a recording method according to another embodiment of the present invention is given. The recording method may be applied to a recording terminal. The recording terminal may be a smart TV, a smart phone, a tablet computer, or the like. The recording method includes the following steps.

In step 201, a mark start instruction is received in a process of recording audio data.

The audio data refers to data acquired by collecting voice information in a scenario. The mark start instruction is used for triggering marking of the audio data, and may be triggered by a user or automatically triggered by the terminal. This embodiment sets no limitation to the manner of triggering the mark start instruction.

In step 202, a mark event is established according to the mark start instruction, and a parameter of the mark event is recorded, wherein the mark event is used for marking the audio data.

The recording terminal may trigger establishment of a mark event according to the received mark start instruction. The mark event is used for marking the audio data, such that the audio data is searched via a mark. For example, a certain audio segment in the audio data is marked.

The mark event may include at least one parameter, such that the mark event may be loaded according to the parameter in playing of the audio data. Therefore, upon establishing the mark event, the recording terminal also needs to record the parameter of the mark event. The recording of a parameter of the mark event may include:
recording an event identifier, an audio identifier and mark start time, the event identifier being used for identifying the mark event, the audio identifier being used for identifying the audio data, the mark start time being used for recording a recording time point of the audio data upon start of marking the mark event.

The event identifier "Event ID" may be assigned by a predetermined device, for identifying the mark event. The predetermined device may be a recording terminal or a device for managing the mark event, for example, a database, a server, or the like. The event identifier may be recorded at any time upon establishment of the mark event and before completion of establishment of the mark event.

The audio identifier "File ID" may be determined by the predetermined device, for identifying the audio data corresponding to the mark event. The audio identifier may be a file name, a hash value obtained by a hash operation on the file name, or the like, which is not limited in this embodiment. The audio identifier may be recorded at any time upon establishment of the mark event and before completion of establishment of the mark event.

The mark start time "Start Time" is a time point of establishing the mark event recorded by the recording terminal, wherein the time point corresponds to a recording time point of the audio data. For example, the mark event is established when the recording time of the audio data is the 3rd minute; and in this case, the mark start time recorded by the recording terminal is the time point of the 3rd minute.

In step 203, if the parameter of the mark event further includes a mark type, a mark request in the mark start instruction is acquired.

Since the audio data may be marked in a plurality of manners, the recording terminal may categorize the mark events, and configure the parameter of the mark event according to the mark type such that the parameter more complies with the characteristics of the mark event. In this way, a plurality of manners for implementing the mark event are provided, thereby enriching the manners of marking the audio data.

In this embodiment, the recording terminal may acquire the mark request via interaction, wherein the mark request is used for determining the type of the mark event. In an embodiment, the mark request may also be carried in the mark start instruction. In this case, the mark request may be acquired directly according to the mark start instruction, to save operations.

In step 204, the mark type is determined according to the mark request, the mark type including at least one of a key mark and an insertion mark; wherein the key mark is used for marking the to-be-marked audio data determined between the mark start time and the mark end time, and the insertion mark is used for marking a display event of the to-be-marked audio data determined between the mark start time and the mark end time, the display event including displaying predetermined content.

If the mark type indicates a key mark, a prompt may be made to a certain audio segment in the audio data. For example, if a prompt is to be made for the audio segment in the audio data between the 3rd minute and the 5th minute in the recording time, a play progress bar may be pre-loaded, and the progress bar between the 3rd minute and the 5th minute is bolded, or is changed in display color, or the audio segment may be prompted via voice, picture or text.

If the mark type indicates an insertion mark, predetermined content may be displayed in a process of playing the audio data, wherein the predetermined content may include pictures, texts, videos or the like.

In this embodiment, the recording terminal may identify the mark type "Event Type" according to a predetermined value. For example, the value of the "Event Type" is set to 0 to indicate a key mark, and set to 1 to indicate an insertion mark. This embodiment sets no limitation to the manner of setting the mark type.

Further, if the mark type indicates an insertion mark, the parameter of the mark event may further include a storage path of the predetermined content, or both a storage path of the predetermined content and a predetermined display duration of the predetermined content.

If the mark type indicates an insertion mark, the recording terminal may also need to acquire a storage path "Event Path" of the predetermined content, such that the predetermined content that is inserted is acquired via the storage path. The storage path may be acquired in a plurality of manners, for example, a default storage path, or a predetermined storage path, or a storage path of a file in a predetermined program which is invoked to acquire the predetermined content, or the like. Assume that the mark event is an inserted picture, a camera may be invoked to pick up pictures, and a path where the pictures picked up by the camera are stored is determined as the storage path.

In an embodiment, the recording terminal may also set a predetermined display duration for the predetermined content, such that the display duration of the predetermined content is determined according to the predetermined display duration, thereby optimizing the display effect. For example, a default display duration may be set, or the display duration may be set according to user's inputs, which is not limited in this embodiment.

It should be supplemented that, the parameter of the mark event may further include a mark, wherein the mark is used for describing the mark event.

In this embodiment, the recording terminal may designate a mark for each mark event, such that the user determines the mark event according to the mark. The mark may be an event name or the like of the mark event.

In step 205, a mark end instruction is received.

The mark end instruction is used for triggering ending of the mark event, and may be triggered by a user or automatically triggered by the terminal. This embodiment sets no limitation to the manner of triggering the mark end instruction.

In step 206, recording of the parameter of the mark event is completed according to the mark end instruction to obtain a mark data structure.

Completing recording of the parameter of the mark event according to the mark end instruction may include:
recording mark end time, the mark end time being used for recording a recording time point of the audio data upon end of marking the mark event.

The mark end time "End Time" is a time point of completing establishment of the mark event recorded by the recording terminal, wherein the time point corresponds to a recording time point of the audio data. For example, the establishment the mark event is completed when the recording time of the audio data is the 15th minute; and in this case, the mark end time recorded by the recording terminal is the time point of the 15th minute.

It should be noted that if the mark type indicates an insertion type, the mark end time may be the same as the mark start time, i.e., the time point of the recorded mark start time is read, and the time point is determined as the mark end time; or the mark end time may be different from the mark start time, and in this case, the time point at which the mark end instruction is received may be recorded, and the time point is determined as the mark end time.

A recording terminal ends establishment the mark event according to the received mark end instruction, and completes recording of the acquired parameter of the mark event, wherein the mark event has at least one parameter.

At least one mark event is established. Therefore, the recording terminal may store the parameter using the parameter name as an index during storing of the parameter of the mark event, that is, the same parameters of all the mark events are stored in one directory. In an embodiment, to facilitate searching of the parameter of the mark event and improve the loading efficiency of the mark event, the recording terminal may store the parameter using the mark event as an index, that is, all the parameters of the same mark event are stored in one directory. In this way, the mark data structure may be obtained.

In step 207, the audio data and the mark data structure are stored to obtain an audio file.

The recording terminal may store the audio data and the mark data structure together. Alternatively, in an embodiment, the terminal may separately store the audio data and the mark data structure, such that data in the same structure is managed conveniently. However, this embodiment sets no limitation to the manner of storing the audio data and the mark data structure.

Upon storing the mark data structure, the recording terminal continues detecting whether a mark start instruction is received. If another mark start instruction is received, the recording terminal continues establishing a mark event. Therefore, an audio file includes audio date obtained by recording and at least one mark data structure obtained in the process of recording the audio data, wherein the mark data structure one-to-one corresponds to the mark event.

In conclusion, according to the recording method provided in the embodiments of the present invention, a mark start instruction is received in a process of recording audio data, a mark event is established according to the mark start instruction and a parameter of the mark event is recorded, wherein the mark event is used for marking the audio data; a mark end instruction is received, recording of the parameter of the mark event is completed according to the mark end instruction to obtain a mark data structure, and the audio data and the mark data structure are stored to obtain an audio file. In this way, the problem that the information acquisition efficiency is reduced due to complicated operations of searching for predetermined content in the audio data via repeatedly listening is solved, and the effect of improving the information acquisition efficiency is achieved. In addition, a mark request in the mark start instruction is acquired, a mark type may be determined according to the mark request, and a display event may be marked in the process of recording the audio data. This achieves displaying of the predetermined content in playing the audio data, solves the problem that displayed content in a scenario fails to be represented according to the audio data, and achieves the effect of improving the information acquisition efficiency according to the displayed content.

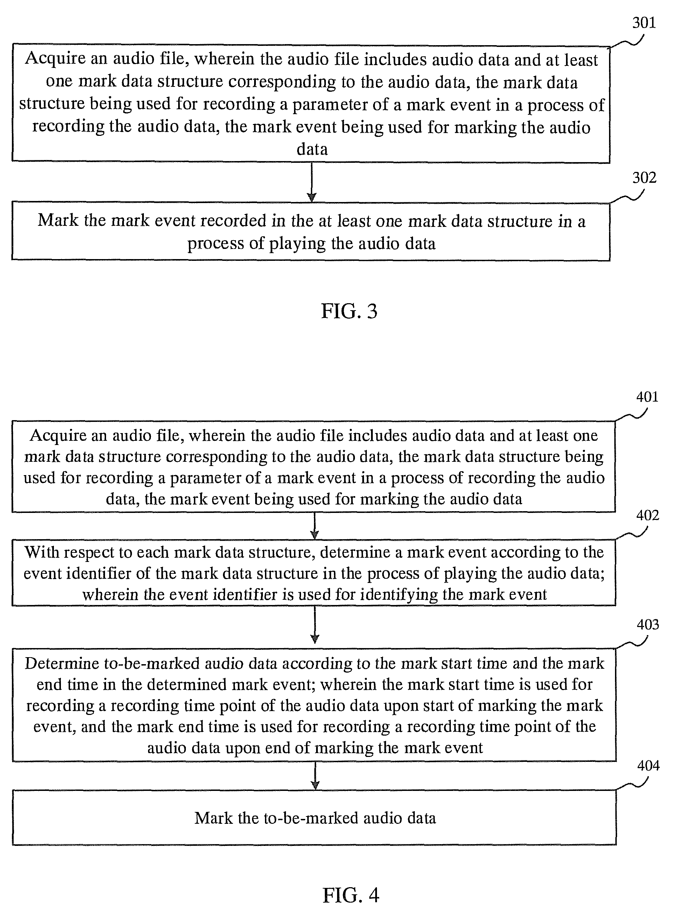

Referring to FIG. 3, a flowchart illustrating a playing method according to an embodiment of the present invention is given. The playing method may be applied to a recording terminal. The recording terminal may be a smart TV, a smart phone, a tablet computer, or the like. The playing method includes the following steps.

In step 301, an audio file is acquired, wherein the audio file includes audio data and at least one mark data structure corresponding to the audio data, the mark data structure being used for recording a parameter of a mark event in a process of recording the audio data, the mark event being used for marking the audio data.

The audio data refers to data acquired by collecting voice information in a scenario. In the process of recording the audio data, a mark event may be established, and a parameter of the mark event may be recorded to obtain the mark data structure. There is at least one mark data structure, and the mark data structure one-to-one corresponds to the mark event.

The method for acquiring an audio file by the playing terminal is related to the manner of storing the audio file. For example, if the audio data and the mark data structure are stored together, the playing terminal may acquire both the audio data and the mark data structure; if the audio data and the mark data structure are separately stored, the playing terminal may firstly acquire the audio data, and then acquire the mark data structure corresponding to the audio data according to the audio data. This embodiment sets no limitation to the manner of acquiring the audio file.

In step 302, the mark event recorded in the at least one mark data structure is marked in a process of playing the audio data.

The playing terminal may determine the mark event according to the acquired mark data structure, and mark the mark event in the process of playing the audio data. For example, a certain audio segment in the audio data is marked.

In conclusion, according to the playing method provided in the embodiments of the present invention, an audio file is acquired, wherein the audio file includes audio data and at least one mark data structure corresponding to the audio data, the mark data structure is used for recording a parameter of a mark event in a process of recording the audio data, and the mark event is used for marking the audio data; and the mark event recorded by the at least one mark data structure is marked in the process of playing the audio data. In this way, the problem that the information acquisition efficiency is reduced due to complicated operations of searching for predetermined content in the audio data via repeatedly listening is solved, and the effect of improving the information acquisition efficiency is achieved.

Referring to FIG. 4, a flowchart illustrating a playing method according to another embodiment of the present invention is given. The playing method may be applied to a playing terminal. The playing terminal may be a smart TV, a smart phone, a tablet computer, or the like. The playing method includes the following steps.

In step 401, an audio file is acquired, wherein the audio file includes audio data and at least one mark data structure corresponding to the audio data, the mark data structure being used for recording a parameter of a mark event in a process of recording the audio data, the mark event being used for marking the audio data.

The audio data refers to data acquired by collecting voice information in a scenario. In the process of recording the audio data, a mark event may be established, and a parameter of the mark event may be recorded to obtain the mark data structure. There is at least one mark data structure, and the mark data structure one-to-one corresponds to the mark event.

The method for acquiring an audio file by the playing terminal is related to the manner of storing the audio file. For example, if the audio data and the mark data structure are stored together, the playing terminal may acquire both the audio data and the mark data structure; if the audio data and the mark data structure are separately stored, the playing terminal may firstly acquire the audio data, and then acquire the mark data structure corresponding to the audio data according to the audio data. This embodiment sets no limitation to the manner of acquiring the audio file.

If the audio data and the mark data structure are separately stored, the mark data structure includes an audio identifier, wherein the audio identifier is used for identifying the audio data. In this case, acquiring an audio file may include:
acquiring audio data and an audio identifier of the audio data;
searching in the audio identifiers included in the mark data structure for an audio identifier identical to the acquired audio identifier of the audio data; and
acquiring at least one mark data structure to which the searched audio identifier pertains.

To make clear whether the audio data has a mark event, upon acquiring audio data to be played, the playing terminal needs to search for a mark data structure corresponding to the audio data. In an embodiment, the playing terminal may search for the mark data structure via the audio identifier identifying the audio data.

The recording terminal may generate and store the audio identifier in the process of recording the audio data. Further, the recording terminal may add the audio identifier to the mark data structure corresponding to the audio data. In this case, upon selecting audio data to be played, the playing terminal may acquire the audio identifier of the audio data, search for all the mark data structures including the acquired audio identifier, and determine the searched mark data structure as the mark data structure corresponding to the audio data.

The audio identifier "File ID" may be a file name, a hash value obtained by a hash operation on the file name, or the like, which is not limited in this embodiment.

In step 402, with respect to each mark data structure, a mark event is determined according to the event identifier of the mark data structure; wherein the event identifier is used for identifying the mark event.

In this embodiment, if the mark data structure includes an event identifier "Event ID", the playing terminal may determine the mark event according to the event identifier.

In step 403, to-be-marked audio data is determined according to the mark start time and the mark end time in the determined mark event; wherein the mark start time is used for recording a recording time point of the audio data upon start of marking the mark event, and the mark end time is used for recording a recording time point of the audio data upon end of marking the mark event.

In this embodiment, if the mark data structure includes mark start time and mark end time, the playing terminal may determine to-be-marked audio data according to the mark start time and the mark end time.

If the mark start time is different from the mark end time, the data to be marked is an audio segment. For example, if the mark start time is the time point of the 3rd minute in the process of playing the audio data, and the mark end time is the time point of the 5th minute in the process of playing the audio data, then the to-be-marked audio data is an audio segment recorded between the 3rd minute and the 5th minute.

If the mark start time is the same as the mark end time, the to-be-marked audio data is an audio point. For example, if the mark start time and the mark end time are both a time point of the sixth minute in the process of playing the audio data, then the to-be-marked audio data is an audio point at the sixth minute in the process of recording the audio data.

In step 404, the to-be-marked audio data is marked.

Upon determining the to-be-marked audio data, the playing terminal may mark the to-be-marked audio data according to the determined mark event.

To enrich the manners of marking the audio data, the recording terminal may also allocate a plurality of mark events, and record mark types of the mark events in the mark data structures. Therefore, the mark data structure further includes a mark type, wherein the mark type includes at least one of a key mark and an insertion mark; wherein the key mark is used for marking the to-be-marked audio data determined between the mark start time and the mark end time, and the insertion mark is used for marking a display event of the to-be-marked audio data determined between the mark start time and the mark end time, the display event including displaying predetermined content.

The method may further include:
reading the mark type.

The marking the to-be-marked audio data includes:
if the read mark type indicates the key mark, giving a particular prompt to the to-be-marked audio data; and
if the read mark type indicates the insertion mark, displaying the predetermined content at predetermined time, the predetermined time being a time between mark end time of a previous mark event and mark start time of a next mark event of the to-be-marked audio data.

In this embodiment, the playing terminal may determine the mark type "Event Type" according to a predetermined rule and a read value. For example, the predetermined rule is that the value of the "Event Type" is set to 0 to indicate a key mark and set to 1 to indicate an insertion mark; in this case, if the value read by the playing terminal is 0, the playing terminal determines the mark type as a key mark, and if the value read by the playing terminal is 1, the playing terminal determines the mark type as an insertion mark. This embodiment sets no limitation to the manner of reading the mark type.

If the mark type indicates a key mark, a prompt may be made to a certain section of audio in the audio data. For example, if a prompt is to be made for the audio segment in the audio data between the 3rd minute and the 5th minute in the recording time, the playing terminal may pre-load a play progress bar, and bold the progress bar between the 3rd minute and the 5th minute, or change the display color, or the playing terminal may prompt the audio segment via voice, picture or text.

If the mark type indicates an insertion mark, predetermined content may be displayed in a process of playing the audio data, wherein the predetermined content may include pictures, texts, videos or the like. The playing terminal may display the predetermined content at a position corresponding to the play progress bar at predetermined time. To enhance the display effect, the playing terminal may display the predetermined content in full screen.

If the mark event has a previous mark event and a next mark event, the predetermined time may be any time between display stop time of a previous mark event and display start time of a next mark event; if the mark event does not have a previous mark event, the predetermined time is any time before the display start time of the next mark event; and if the mark event does not have a next mark event, the predetermined time is any time after the display stop time of the previous mark event. The display start time may be the mark start time, and the display stop time may be the mark end time.

Further, to optimize the display effect, a predetermined display duration may be defined, wherein the predetermined display duration may be a default display duration or a display duration defined according to user's inputs, or the like, which is not limited in this embodiment. Therefore, the mark data structure may further include a predetermined display duration of the predetermined content; in this case, displaying the predetermined content at predetermined time may include:
backwardly positioning the predetermined display duration based on the predetermined time to obtain first stop time;
if the first stop time is less than the mark start time of the next mark event, displaying the predetermined content from the predetermined time to the first stop time; and
if the first stop time is greater than the mark start time of the next mark event, displaying the predetermined content from the predetermined time to second stop time, the second stop time being greater than the predetermined time but less than or equal to the mark start time of the next mark event.

For example, if the predetermined display time is the 30th second in the process of playing the audio data, and the predetermined display duration is 50 seconds, it may be determined that the first stop time is the 80th second in the process of playing the audio data; if the mark start time of the next mark event is the 100th second, it may be determined that the first stop time is the 80th second in the process of playing the audio data; and if the mark start time of the next mark event is the 70th second in the process of playing the audio data, which is less than the 80th second, it may be determined that the second stop time is any time within an time interval of (30s, 70s].

The mark data structure further includes a storage path of the predetermined content. In this case, the method may further include:
acquiring the predetermined content according to the storage path.

Before displaying the predetermined content, the playing terminal also needs to acquire a storage path in the mark data structure, and acquire the predetermined content according to the storage path. The storage path may be a default storage path, or a predetermined storage path, or a storage path of a file in a predetermined program which is invoked to acquire the predetermined content, or the like. Assume that the mark event is inserting picture and a camera is invoked to pick up pictures, then the storage path is a path where the pictures picked up by the camera are stored.

It should be supplemented that the mark data structure further includes a mark, wherein the mark is used for describing the mark event. In this case, the method may further include: reading the mark.

In this embodiment, the playing terminal may also read a mark in the mark data structure, and display the mark, such that the user clearly determines the mark event according to the mark. The mark may be an event name or the like of the mark event.

In the process of playing the audio data by the playing terminal, with respect to each mark data structure, steps 402 to 404 may be performed for the mark data structure to mark the mark event.

Further, the playing terminal may mark the mark event in the process of loading the audio data, or the playing terminal may mark the mark event when playing the to-be-marked audio data, which is not limited in this embodiment.

In an embodiment, if the mark event is marked in the process of loading the audio data and the mark type indicates an insertion mark, such content as thumbnail of the predetermined content may be displayed for each audio point to avoid the problem that marking of another mark event is hindered, thereby improving the marking effect.

In conclusion, according to the playing method provided in the embodiments of the present invention, an audio file is acquired, wherein the audio file includes audio data and at least one mark data structure corresponding to the audio data, the mark data structure is used for recording a parameter of a mark event in a process of recording the audio data, and the mark event is used for marking the audio data; and the mark event recorded by the at least one mark data structure is marked in the process of playing the audio data. In this way, the problem that the information acquisition efficiency is reduced due to complicated operations of searching for predetermined content in the audio data via repeatedly listening is solved, and the effect of improving the information acquisition efficiency is achieved. In addition, a mark type is read, and if the read mark type indicates an insertion mark, predetermined content is displayed at predetermined time. This achieves displaying of the predetermined content in playing the audio data, solves the problem that displayed content in a scenario fails to be represented according to the audio data, and achieves the effect of improving the information acquisition efficiency according to the displayed content.

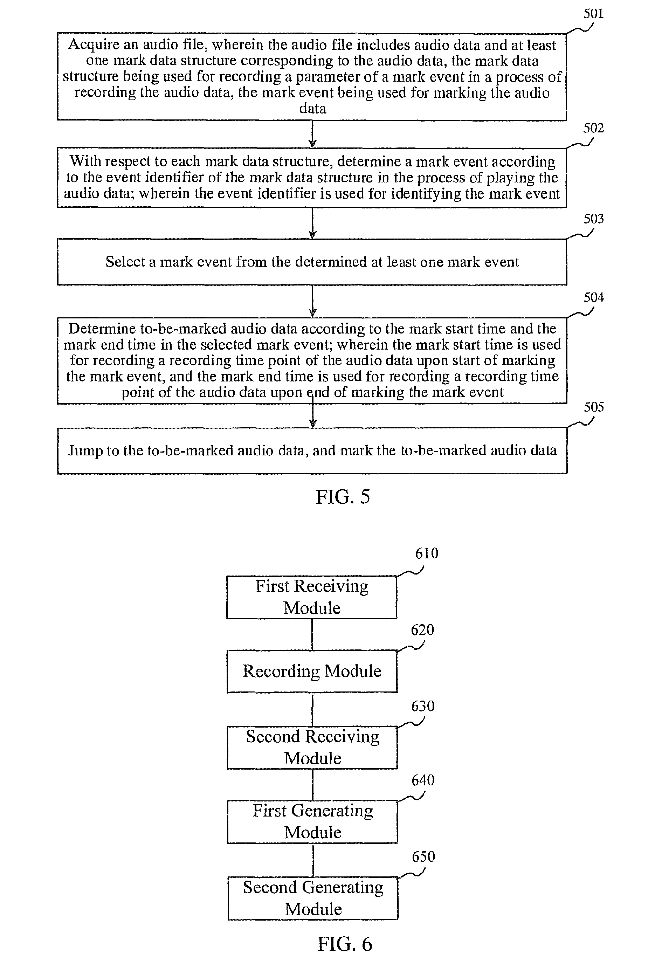

Referring to FIG. 5, a flowchart illustrating a playing method according to still another embodiment of the present invention is given. The playing method may be applied to a playing terminal. The playing terminal may be a smart TV, a smart phone, a tablet computer, or the like. The playing method includes the following steps.

In step 501, an audio file is acquired, wherein the audio file includes audio data and at least one mark data structure corresponding to the audio data, the mark data structure being used for recording a parameter of a mark event in a process of recording the audio data, the mark event being used for marking the audio data.

The method for acquiring an audio file by the playing terminal is related to the manner of storing the audio file. For example, if the audio data and the mark data structure are stored together, the playing terminal may acquire both the audio data and the mark data structure; if the audio data and the mark data structure are separately stored, the playing terminal may firstly acquire the audio data, and then acquire the mark data structure corresponding to the audio data according to the audio data. This embodiment sets no limitation to the manner of acquiring the audio file.

If the audio data and the mark data structure are separately stored, then the mark data structure includes an audio identifier, wherein the audio identifier is used for identifying the audio data. In this case, acquiring an audio file may include:
acquiring audio data and an audio identifier of the audio data;
searching in the audio identifiers included in the mark data structure for an audio identifier identical to the acquired audio identifier of the audio data; and
acquiring at least one mark data structure to which the searched audio identifier pertains.

Acquiring the audio file by the playing terminal may be referenced to the description in step 401, which is thus not described herein any further.

In step 502, with respect to each mark data structure, a mark event is determined according to the event identifier of the mark data structure; wherein the event identifier is used for identifying the mark event.

In this embodiment, if the mark data structure includes an event identifier "Event ID", the playing terminal may determine the mark event according to the event identifier.

In step 503, a mark event is selected from the determined at least one mark event.

The playing terminal may determine the mark events according to each of the event identifiers, and exhibit all the determined mark events, such that the user may select a mark event from all the exhibited mark events, and mark the mark event.

In step 504, to-be-marked audio data is determined according to the mark start time and the mark end time in the selected mark event; wherein the mark start time is used for recording a recording time point of the audio data upon start of marking the mark event, and the mark end time being used for recording a recording time point of the audio data upon end of marking the mark event.

The procedure of determining, according to the mark start time and the mark end time in the selected mark event, to-be-marked audio data is the same as that of determining, according to the mark start time and the mark end time in the determined mark event, to-be-marked audio data. The details may be referenced to the description in step 403, which is thus not described herein any further.

In step 505, the to-be-marked audio data is jumped to, and the to-be-marked audio data is marked.

The playing terminal may acquire the link of a selected mark event, jump to the to-be-marked audio data corresponding to the mark event according to the link, mark the to-be-marked audio data, and starts playing the to-be-marked audio data. The link of the event to be marked is used for jumping to the to-be-marked audio data corresponding to the mark event, which may be predetermined.

To enrich the manners of marking the audio data, the recording terminal may also allocate a plurality of mark events and record mark types of the mark events in the mark data structures. Therefore, the mark data structure further includes a mark type, wherein the mark type includes at least one of a key mark and an insertion mark; wherein the key mark is used for marking the to-be-marked audio data determined between the mark start time and the mark end time, and the insertion mark is used for marking a display event of the to-be-marked audio data determined between the mark start time and the mark end time, the display event including displaying predetermined content.

The method further includes:
reading the mark type.

Marking the to-be-marked audio data includes:
if the read mark type indicates the key mark, giving a particular prompt to the to-be-marked audio data; and
if the read mark type indicates the insertion mark, displaying the predetermined content at predetermined time, the predetermined time being a time between mark end time of a previous mark event and mark start time of a next mark event of the to-be-marked audio data.

The manner in which the playing terminal marks a key mark and an insertion mark may be referenced to the description in step 404, which is thus not described herein any further.

Further, to optimize the display effect, a predetermined display duration may be defined, wherein the predetermined display duration may be a default display duration or a display duration defined according to user's inputs, or the like, which is not limited in this embodiment. Therefore, the mark data structure further includes a predetermined display duration of the predetermined content; in this case, displaying the predetermined content at predetermined time may include:
backwardly positioning the predetermined display duration based on the predetermined time to obtain first stop time;
if the first stop time is less than the mark start time of the next mark event, displaying the predetermined content from the predetermined time to the first stop time; and
if the first stop time is greater than the mark start time of the next mark event, displaying the predetermined content from the predetermined time to second stop time, the second stop time being greater than the predetermined time but less than or equal to the mark start time of the next mark event.

The mark data structure further includes a storage path of the predetermined content. In this case, the method may further include:
acquiring the predetermined content according to the storage path.

Before displaying the predetermined content, the playing terminal also needs to acquire a storage path in the mark data structure, and acquire the predetermined content according to the storage path. The storage path may be a default storage path, or a predetermined storage path, or a storage path of a file of a predetermined program which is invoked to acquire the predetermined content, or the like. Assume that the mark event is inserting picture and a camera is invoked to pick up pictures, the storage path is a path where the pictures picked up by the camera are stored.

It should be supplemented that the mark data structure further includes a mark, wherein the mark is used for describing the mark event. In this case, the method may further include: reading the mark.

In this embodiment, the playing terminal may also read a mark in the mark data structure, and display the mark, such that the user clearly determines the mark event according to the mark. The mark may be an event name or the like of the mark event. Further, the playing terminal may display the mark when exhibiting the mark event, such that the user selects a mark event.

Further, the playing terminal may mark the mark event in the process of loading the audio data, or the playing terminal may mark the mark event when playing the to-be-marked audio data, or the playing terminal only marks the selected mark event, which is not limited in this embodiment.

In an embodiment, if the mark event is marked in the process of loading the audio data and the mark type indicates an insertion mark, such content as thumbnail of the predetermined content may be displayed for each audio point to avoid the problem that marking of another mark event is hindered, thereby improving the marking effect.

In conclusion, according to the playing method provided in the embodiments of the present invention, an audio file is acquired, wherein the audio file includes audio data and at least one mark data structure corresponding to the audio data, the mark data structure is used for recording a parameter of a mark event in a process of recording the audio data, and the mark event is used for marking the audio data; and the mark event recorded by the at least one mark data structure is marked in the process of playing the audio data. In this way, the problem that the information acquisition efficiency is reduced due to complicated operations of searching for predetermined content in the audio data via repeatedly listening is solved, and the effect of improving the information acquisition efficiency is achieved. In addition, a mark type is read, and if the read mark type indicates an insertion mark, predetermined content is displayed at predetermined time. This achieves displaying of the predetermined content in playing the audio data, solves the problem that displayed content in a scenario fails to be represented according to the audio data, and achieves the effect of improving the information acquisition efficiency according to the displayed content.

Still another embodiment of the present invention provides an audio file. The audio file may be obtained according to the recording method as illustrated in FIG. 1 or FIG. 2. The audio file includes:
audio data and at least one mark data structure corresponding to the audio data, the mark data structure being used for recording a parameter of a mark event corresponding to the audio data, the mark event being used for marking the audio data.

The mark data structure one-to-one corresponds to the mark event.

Further, the mark data structure includes: an event identifier, an audio identifier, mark start time, and mark end time; wherein
the event identifier is used for identifying the mark event;
the audio identifier is used for identifying the audio data;
the mark start time is used for recording a start time point of the mark event; and
the mark end time is used for recording an end time point of the mark event.

The event identifier "Event ID" may be a value assigned by a predetermined device, and the audio identifier may be a file name, a hash value obtained by a hash operation on the file name, or the like, which is not limited in this embodiment.

Further, the mark data structure further includes a mark type, the mark type including at least one of a key mark and an insertion mark; wherein
the key mark is used for marking the to-be-marked audio data determined between the mark start time and the mark end time; and
the insertion mark is used for marking a display event of the to-be-marked audio data determined between the mark start time and the mark end time, the display event including displaying predetermined content.

The mark type "Event Type" may be identified according to a predetermined value. For example, the value of the "Event Type" is set to 0 to indicate a key mark, and set to 1 to indicate an insertion mark. This embodiment sets no limitation to the manner of setting the mark type.

Further, if the mark type indicates an insertion mark, the mark data structure further includes a storage path of the predetermined content, or both a storage path of the predetermined content and a predetermined display duration of the predetermined content.

If the mark type indicates an insertion mark, the mark data structure further includes a storage path of the predetermined content, such that the predetermined content that is inserted is acquired via the storage path "Event Path".

Optionally, a predetermined display duration may be set, such that a display duration of the predetermined content is determined according to the predetermined display duration, thereby optimizing the display effect.

In an embodiment, the mark data structure further includes a mark, wherein the mark is used for describing the mark event.

The mark may be an event name or the like of the mark event.

Since the audio file may be stored in a computer-readable storage medium, the present invention further provides a computer-readable storage medium, wherein the computer-readable storage medium includes the above audio file.

Referring to FIG. 6, a structural block diagram illustrating a recording device according to an embodiment of the present invention is given. The recording device may be applied to a recording terminal. The recording terminal may be a smart TV, a smart phone, a tablet computer, or the like. The recording device includes:
a first receiving module 610, configured to receive a mark start instruction in a process of recording audio data;
a recording module 620, configured to establish a mark event according to the mark start instruction received by the first receiving module 610, and record a parameter of the mark event, the mark event being used for marking the audio data;
a second receiving module 630, configured to receive a mark end instruction after the recording module 620 establishes the mark event according to the mark start instruction and records the parameter of the mark event;
a first generating module 640, configured to complete recording of the parameter of the mark event according to the mark end instruction received by the second receiving module 630 to obtain a mark data structure; and
a second generating module 650, configured to store the audio data and the mark data structure generated by the first generating module 640 to obtain an audio file.

In conclusion, according to the recording device provided in the embodiments of the present invention, a mark start instruction is received in a process of recording audio data, a mark event is established according to the mark start instruction and a parameter of the mark event is recorded, wherein the mark event is used for marking the audio data; a mark end instruction is received, recording of the parameter of the mark event is completed according to the mark end instruction to obtain a mark data structure, and the audio data and the mark data structure are stored to obtain an audio file. In this way, the problem that the information acquisition efficiency is reduced due to complicated operations of searching for predetermined content in the audio data via repeatedly listening is solved, and the effect of improving the information acquisition efficiency is achieved.

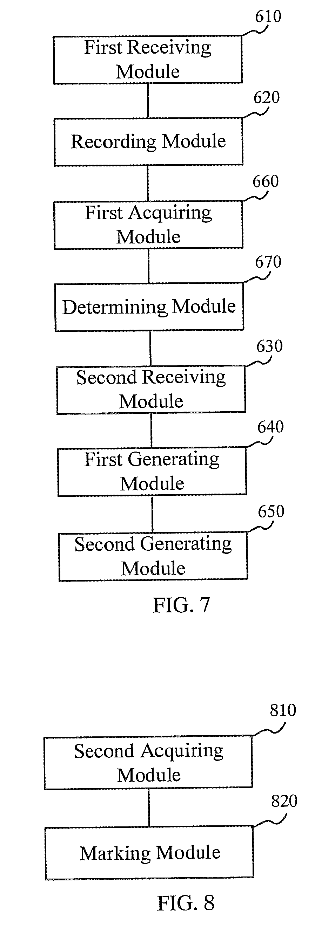

Referring to FIG. 7, a structural block diagram illustrating a recording device according to still another embodiment of the present invention is given. The recording device may be applied to a recording terminal. The recording terminal may be a smart TV, a smart phone, a tablet computer, or the like. The recording device includes: a first receiving module 610, a recording module 620, a second receiving module 630, a first generating module 640, and a second generating module 650.

The first receiving module 610 is configured to receive a mark start instruction in a process of recording audio data.

The recording module 620 is configured to establish a mark event according to the mark start instruction received by the first receiving module 610, and record a parameter of the mark event, the mark event being used for marking the audio data.

The second receiving module 630 is configured to receive a mark end instruction after the recording module 620 establishes the mark event according to the mark start instruction and records the parameter of the mark event.

The first generating module 640 is configured to complete recording of the parameter of the mark event according to the mark end instruction received by the second receiving module 630 to obtain a mark data structure.

The second generating module 650 is configured to store the mark data structure generated by the first generating module 640 and the audio data, to obtain an audio file.

The recording module 620 is configured to record an event identifier, an audio identifier and mark start time, the event identifier being used for identifying the mark event, the audio identifier being used for identifying the audio data, the mark start time being used for recording a recording time point of the audio data upon start of marking the mark event.

The second generating module 650 is configured to record mark end time, the mark end time being used for recording a recording time point of the audio data upon end of marking the mark event.

Further, if the parameter of the mark event includes a mark type, the device further includes:
a first acquiring module 660, configured to acquire a mark request in the mark start instruction; and
a determining module 670, configured to determine the mark type according to the mark request acquired by the first acquiring module 660, the mark type including at least one of a key mark and an insertion mark; wherein the key mark is used for marking the to-be-marked audio data determined between the mark start time and the mark end time, and the insertion mark is used for marking a display event of the to-be-marked audio data determined between the mark start time and the mark end time, the display event including displaying predetermined content.

Further, if the mark type indicates an insertion mark, the parameter of the mark event further includes a storage path of the predetermined content, or both a storage path of the predetermined content and a predetermined display duration of the predetermined content.

In an embodiment, the parameter of the mark event further includes a mark, wherein the mark is used for describing the mark event.

In conclusion, according to the recording device provided in the embodiments of the present invention, a mark start instruction is received in a process of recording audio data, a mark event is established according to the mark start instruction and a parameter of the mark event is recorded, wherein the mark event is used for marking the audio data; a mark end instruction is received, recording of the parameter of the mark event is completed according to the mark end instruction to obtain a mark data structure, and the audio data and the mark data structure are stored to obtain an audio file. In this way, the problem that the information acquisition efficiency is reduced due to complicated operations of searching for predetermined content in the audio data via repeatedly listening is solved, and the effect of improving the information acquisition efficiency is achieved. In addition, a mark request in the mark start instruction is acquired, a mark type may be determined according to the mark request, and a display event may be marked in the process of recording the audio data. This achieves displaying of the predetermined content in playing the audio data, solves the problem that displayed content in a scenario fails to be represented according to the audio data, and achieves the effect of improving the information acquisition efficiency according to the displayed content.

Referring to FIG. 8, a structural block diagram illustrating a playing device according to an embodiment of the present invention is given. The playing device may be applied to a playing terminal. The playing terminal may be a smart TV, a smart phone, a tablet computer, or the like. The playing device includes:
a second acquiring module 810, configured to acquire an audio file, the audio file including audio data and at least one mark data structure corresponding to the audio data, the mark data structure being used for recording a parameter of a mark event in a process of recording the audio data, the mark event being used for marking the audio data; and
a marking module 820, configured to mark the mark event recorded in the at least one mark data structure in a process of playing the audio data acquired by the second acquiring module 810.

In conclusion, according to the playing device provided in the embodiments of the present invention, an audio file is acquired, wherein the audio file includes audio data and at least one mark data structure corresponding to the audio data, the mark data structure is used for recording a parameter of a mark event in a process of playing the audio data, and the mark event is used for marking the audio data; and the mark event recorded by the at least one mark data structure is marked in the process of playing the audio data. In this way, the problem that the information acquisition efficiency is reduced due to complicated operations of searching for predetermined content in the audio data via repeatedly listening is solved, and the effect of improving the information acquisition efficiency is achieved.

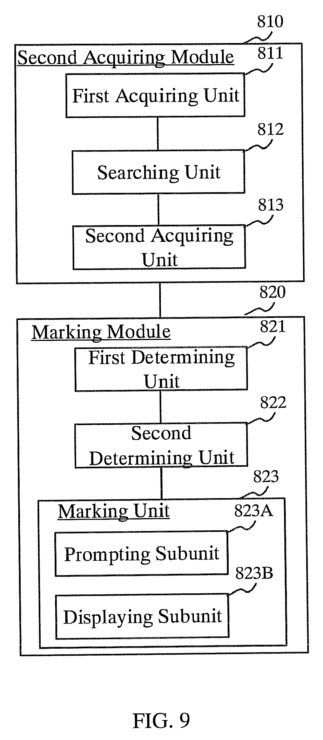

Referring to FIG. 9, a structural block diagram illustrating a playing device according to still another embodiment of the present invention is given. The playing device may be applied to a playing terminal. The playing terminal may be a smart TV, a smart phone, a tablet computer, or the like. The playing device includes a second acquiring module 810 and a marking module 820.

The second acquiring module 810 is configured to acquire an audio file, the audio file including audio data and at least one mark data structure corresponding to the audio data, the mark data structure being used for recording a parameter of a mark event in a process of recording the audio data, the mark event being used for marking the audio data.

The marking module 820 is configured to mark the mark event recorded in the at least one mark data structure in a process of playing the audio data acquired by the second acquiring module 810.

The mark data structure includes an audio identifier, the audio identifier being used for identifying the audio data; and the second acquiring module 810 includes:
a first acquiring unit 811, configured to acquire audio data and an audio identifier of the audio data;
a searching unit 812, configured to search in the audio identifiers included in the mark data structure for an audio identifier identical to the audio identifier of the audio data acquired by the first acquiring unit 811; and
a second acquiring unit 813, configured to acquire at least one mark data structure to which the audio identifier searched out by the searching unit 812 pertains.

The mark data structure includes: an event identifier, mark start time and mark end time; wherein the event identifier is used for identifying the mark event; the mark start time is used for recording a recording time point of the audio data upon start of marking the mark event; and the mark end time is used for recording a recording time point of the audio data upon end of marking the mark event.

The marking module 820 includes:
a first determining unit 821, configured to, in the process of playing the audio data, determine the mark event according to the event identifier included in the mark data structure for each mark data structure; and
a second determining unit 822, configured to determine, according to the mark start time and the mark end time in the mark event determined by the first determining unit 821, to-be-marked audio data; and
a marking unit 823, configured to mark the to-be-marked audio data determined by the second determining unit 822.

Further, the mark data structure further includes a mark type, wherein the mark type includes at least one of a key mark and an insertion mark; wherein the key mark is used for marking the to-be-marked audio data determined between the mark start time and the mark end time, and the insertion mark is used for marking a display event of the to-be-marked audio data determined between the mark start time and the mark end time, the display event including displaying predetermined content.

The device further includes:
a first reading module, configured to read the mark type; and
the marking unit 823 includes:
   a prompting subunit 823A, configured to, if the mark type read by the first reading module indicates the key mark, give a particular prompt to the to-be-marked audio data; and
   a displaying subunit 823B, configured to, if the mark type read by the first reading module indicates the insertion mark, display the predetermined content at predetermined time, the predetermined time being a time between mark end time of a previous mark event and mark start time of a next mark event of the to-be-marked audio data.

Further, the mark data structure further includes a storage path of the predetermined content.

The device further includes:
a third acquiring module, configured to acquire the predetermined content according to the storage path.

The mark data structure further includes a predetermined display duration of the predetermined content; the displaying subunit 823B is configured to: backwardly position the predetermined display duration based on the predetermined time to obtain first stop time; if the first stop time is less than the mark start time of the next mark event, display the predetermined content from the predetermined time to the first stop time; and if the first stop time is greater than the mark start time of the next mark event, display the predetermined content from the predetermined time to second stop time, the second stop time being greater than the predetermined time but less than or equal to the mark start time of the next mark event.

In an embodiment, the mark data structure further includes a mark, wherein the mark is used for describing the mark event

The device further includes:
a second reading module, configured to read the mark.

In conclusion, according to the playing device provided in the embodiments of the present invention, an audio file is acquired, wherein the audio file includes audio data and at least one mark data structure corresponding to the audio data, the mark data structure is used for recording a parameter of a mark event in a process of recording the audio data, and the mark event is used for marking the audio data; and the mark event recorded by the at least one mark data structure is marked in the process of playing the audio data. In this way, the problem that the information acquisition efficiency is reduced due to complicated operations of searching for predetermined content in the audio data via repeatedly listening is solved, and the effect of improving the information acquisition efficiency is achieved. In addition, a mark type is read, and if the read mark type indicates an insertion mark, predetermined content is displayed at predetermined time. This achieves displaying of the predetermined content in playing the audio data, solves the problem that displayed content in a scenario fails to be represented according to the audio data, and achieves the effect of improving the information acquisition efficiency according to the displayed content.

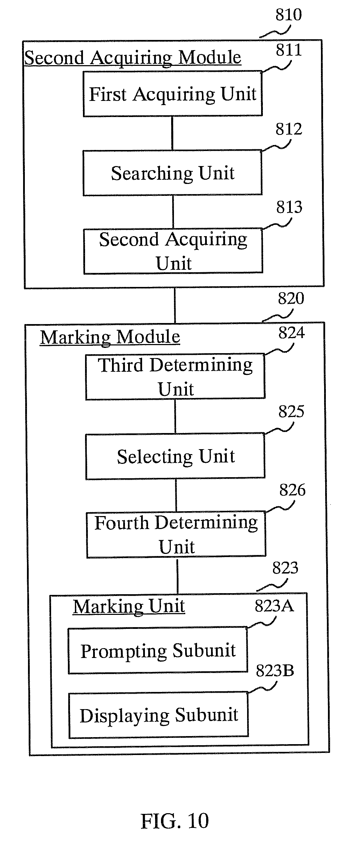

Referring to FIG. 10, a structural block diagram illustrating a playing device according to still another embodiment of the present invention is given. The playing device may be applied to a playing terminal. The playing terminal may be a smart TV, a smart phone, a tablet computer, or the like. The playing device includes a second acquiring module 810 and a marking module 820.

The second acquiring module 810 is configured to acquire an audio file, the audio file including audio data and at least one mark data structure corresponding to the audio data, the mark data structure being used for recording a parameter of a mark event in a process of recording the audio data, the mark event being used for marking the audio data;

The marking module 820 is configured to mark the mark event recorded in the at least one mark data structure in a process of playing the audio data acquired by the second acquiring module 810.

The mark data structure includes an audio identifier, the audio identifier being used for identifying the audio data; and the second acquiring module 810 includes:
a first acquiring unit 811, configured to acquire audio data and an audio identifier of the audio data;
a searching unit 812, configured to search in the audio identifiers included in the mark data structure for an audio identifier identical to the audio identifier of the audio data acquired by the first acquiring unit 811; and
a second acquiring unit 813, configured to acquire at least one mark data structure to which the audio identifier searched out by the searching unit 812 pertains.

The mark data structure includes: an event identifier, mark start time and mark end time; wherein the event identifier is used for identifying the mark event; the mark start time is used for recording a recording time point of the audio data upon start of marking the mark event; and the mark end time is used for recording a recording time point of the audio data upon end of marking the mark event.

The marking module 820 includes:
a third determining unit 824, configured to, in the process of playing the audio data, determine the mark event according to the event identifier included in the mark data structure for each mark data structure; and
a selecting unit 825, configured to select a mark event from the at least one mark event determined by the third determining unit 824; and
a fourth determining unit 826, configured to determine, according to the mark start time and the mark end time in the mark event selected by the selecting unit 825, to-be-marked audio data.

The marking unit 823 is further configured to jump to the to-be-marked audio data determined by the fourth determining unit 826, and mark the to-be-marked audio data.

Further, the mark data structure further includes a mark type, wherein the mark type includes at least one of a key mark and an insertion mark; wherein the key mark is used for marking the to-be-marked audio data determined between the mark start time and the mark end time, and the insertion mark is used for marking a display event of the to-be-marked audio data determined between the mark start time and the mark end time, the display event including displaying predetermined content.

The device further includes:
a first reading module, configured to read the mark type; and
the marking unit 823 includes:
   a prompting subunit 823A, configured to, if the mark type read by the first reading module indicates the key mark, give a particular prompt to the to-be-marked audio data; and
   a displaying subunit 823B, configured to, if the mark type read by the first reading module indicates the insertion mark, display the predetermined content at predetermined time, the predetermined time being a time between mark end time of a previous mark event and mark start time of a next mark event of the to-be-marked audio data.

Further, the mark data structure further includes a storage path of the predetermined content.

The device further includes:
a third acquiring module, configured to acquire the predetermined content according to the storage path.

The mark data structure further includes a predetermined display duration of the predetermined content; the displaying subunit 823B is configured to: backwardly position the predetermined display duration based on the predetermined time to obtain first stop time; if the first stop time is less than the mark start time of the next mark event, display the predetermined content from the predetermined time to the first stop time; and if the first stop time is greater than the mark start time of the next mark event, display the predetermined content from the predetermined time to second stop time, the second stop time being greater than the predetermined time but less than or equal to the mark start time of the next mark event.

In an embodiment, the mark data structure further includes a mark, wherein the mark is used for describing the mark event

The device further includes:
a second reading module, configured to read the mark.

In conclusion, according to the playing device provided in the embodiments of the present invention, an audio file is acquired, wherein the audio file includes audio data and at least one mark data structure corresponding to the audio data, the mark data structure is used for recording a parameter of a mark event in a process of recording the audio data, and the mark event is used for marking the audio data; and the mark event recorded by the at least one mark data structure is marked in the process of playing the audio data. In this way, the problem that the information acquisition efficiency is reduced due to complicated operations of searching for predetermined content in the audio data via repeatedly listening is solved, and the effect of improving the information acquisition efficiency is achieved. In addition, a mark type is read, and if the read mark type indicates an insertion mark, predetermined content is displayed at predetermined time. This achieves displaying of the predetermined content in playing the audio data, solves the problem that displayed content in a scenario fails to be represented according to the audio data, and achieves the effect of improving the information acquisition efficiency according to the displayed content.

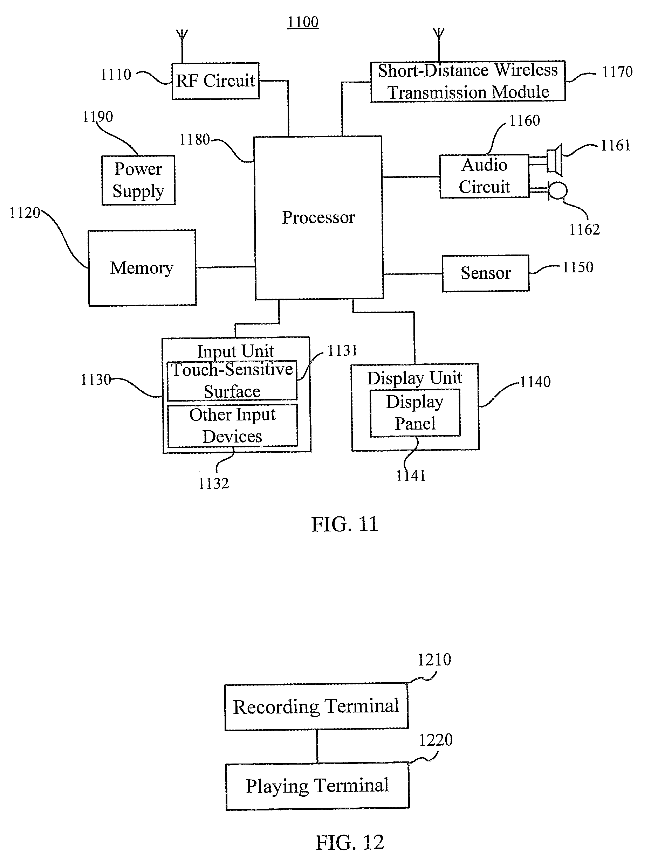

Referring to FIG. 11, a structural block diagram of a terminal according to still another embodiment of the present invention is given. The terminal is applied to the recording methods according to the above embodiments. The terminal according to the embodiment of the present invention may include at least one of the following components: a processor configured to run computer program instructions to implement various processes and methods; a random access memory (RAM) and a read-only memory (ROM) configured to store information and program instructions; a memory configured to store data and information, a database configured to store tables, directories or other data structures, an input/output (I/O) device, an interface, an antenna, and the like. The details are described below.

A terminal 1100 may further include a radio frequency (RF) circuit 1110, a memory 1120 including at least one computer-readable storage medium, an input unit 1130, a display unit 1140, a sensor 1150, an audio circuit 1160, a short-distance wireless transmission module 1170, a processor 1180 having at least one processing core, a power supply 1190, or the like components. A person skilled in the art may understand that the structure of the terminal as illustrated in FIG. 11 does not construct a limitation on the terminal. The terminal may include more or less components than those illustrated in FIG. 11, or combinations of some components, or employ different component deployments.

The RF circuit 1110 may be configured to receive and send signals during information receiving and sending or in the course of a call. Particularly, the RF circuit delivers downlink information received from a base station to the at least one processor 1180 for processing, and in addition, sends involved uplink data to the base station. Typically, the RF circuit 1110 includes, but not limited to, an antenna, at least one amplifier, a tuner, at least one oscillator, a subscriber identity module (SIM) card, a transceiver, a coupler, a low noise amplifier (LNA), a duplexer, and the like. In addition, the RF circuit 1110 may also communicate with a network or another device using wireless communication. The wireless communication may use any communication standard or protocol, including but not limited to: global system of mobile communication (GSM), general packet radio service (GPRS), code division multiple access (CDMA), wideband code division multiple access (WCDMA), long term evolution (LTE), email, short messaging service (SMS), and the like.

The memory 1120 may be configured to store software programs and modules. The processor 1180 executes the software programs and modules stored in the memory 1120 to perform various function applications and data processing. The memory 1120 mainly includes a program storage partition and a data storage partition. The program storage partition may store an operating system, at least one application for implementing a specific function (for example, audio playing function, image playing function, and the like). The data storage partition may store data created according to use of the terminal 1100 (for example, audio data, address book, and the like). In addition, the memory 1120 may include a high speed random access memory, or include a non-volatile memory, for example, at least one disk storage device, a flash memory device, or other non-volatile solid storage device. Correspondingly, the memory 1120 may further include a memory controller, for providing access to the memory 1120 for the processor 1180 and an input unit 1130.

The input unit 1130 may be configured to receive input numbers or characters, and generate signal input of a keyboard, a mouse, an operation rod, an optical or track ball related to user settings and function control. Specifically, the input unit 1130 may include a touch-sensitive surface 1131 and another input device 1132. The touch-sensitive surface 1131 is also referred to as a touch screen or a touch control plate, is capable of collecting a touch operation performed by a user thereon or therearound (for example, an operation performed by the user using fingers, touch pens, or other suitable objects or accessories on or around the touch-sensitive surface 1131), and drives a corresponding connection device according to a preset program. Optionally, the touch-sensitive surface 1131 may include a touch detecting device and a touch controller. The touch detecting device detects a touch azimuth of the user, detects a signal generated by the touch operation, and transmits the signal to the touch controller. The touch controller receives touch information from the touch detecting device, transforms the information into a touch point coordinate, sends the coordinate to the processor 1180, and receives a command issued by the processor 1180 and run the command. In addition, resistive, capacitive, infrared, and surface acoustic wave technologies may be used to implement the touch-sensitive surface 1131. In addition to the touch-sensitive surface 1131, the input unit 1130 may further include another input device 1132. Specifically, the another input device 1132 includes but not limited to at least one of a physical keyboard, a function key (for example, a volume control key, and a switch key), a track ball, a mouse, an operation rod, and the like.

The display unit 1140 may be configured to display information input by the user or information provided to the user, and various graphical user interfaces of the terminal 1100. These graphical user interfaces may be formed by graphics, texts, icons, and videos or any combination thereof. The display unit 1140 may include a display panel 1141. Optionally, the display panel 1141 may be configured by using a liquid crystal display (LCD), an organic light-emitting diode (OLED) or the like. Further, the touch-sensitive surface 1131 may cover the display panel 1141. When detecting a touch operation thereon on therearound, the touch-sensitive surface 1131 transfers the operation to the processor 1180 to determine the type of the touch event. Subsequently, the processor 1180 provides corresponding visual output on the display panel 1141 according to the type of the touch event. In FIG. 11, the touch-screen surface 1131 and the display panel 1141 are two independent components to implement input and output functions. However, in some embodiments, the touch-sensitive surface 1131 may be integrated with the display panel 1141 to implement the input and output functions.

The terminal 1100 may further include at least one sensor 1150, for example, a light sensor, a motion sensor, or another type of sensor. Specifically, the light sensor may include an ambient light sensor and a proximity sensor, where the ambient light sensor is capable of adjusting luminance of the display panel 1141 according to the intensity of the ambient light, and the proximity sensor is capable of shutting the display panel 1141 and/or backlight when the terminal 1100 is moved to the ears. As a type of motion sensor, a gravity sensor is capable of detecting the acceleration of each direction (typically three axes), and when in the static state, is capable of detecting the magnitude and direction of the gravity. The gravity sensor may be applicable to an application for recognizing mobile phone gestures (for example, switching between horizontal and vertical screens, relevant games, and magnetometer gesture calibration), and provide the vibration-based recognition function (for example, pedometers and knocks). The terminal 1100 may further include a gyroscope, a barometer, a hygrometer, a thermometer, and other sensors such as an infrared sensor, which are not described herein any further.

The audio circuit 1160, a loudspeaker 1161, and a microphone 1162 are capable of providing audio interfaces between the user and the terminal 1100. The audio circuit 1160 is capable of transmitting an electrical signal acquired by converting the received audio data to the loudspeaker 1161. The loudspeaker 1161 converts the electrical signal into a voice signal for output. In another aspect, the microphone 1162 converts the collected voice signals into the electrical signals, and the audio circuit 1160 converts the received electrical signals into audio data, and then outputs the audio data to the processor 1180 for processing. The processed audio data is transmitted by the RF circuit 1110 to another terminal; or the processed audio data is output to the memory 1120 for further processing. The audio circuit 1160 may further include an earphone plug for providing communication of an external earphone with the terminal 1100.

The short-distance wireless transmission module 1170 may be a wireless fidelity (WiFi) module, a Bluetooth module, or the like. The terminal 1100 facilitates user's receiving and sending emails, browsing web pages, and accessing streaming media, by using the short-distance wireless transmission module 1170 which provides wireless broadband Internet access services for users. Although FIG. 11 illustrates the short-distance wireless transmission module 1170, it may be understood that the short-distance wireless transmission module 1170 is not a necessary component for the terminal 1100, and may not be configured as required within the essence and scope of the present invention.

The processor 1180 is a control center of the terminal 1100, and connects all parts of the terminal by using various interfaces and lines, and implements various functions and data processing of the terminal 1100 to globally monitor the terminal, by running or performing software programs and/or modules stored in the memory 1120 and calling data stored in the memory 1120. Optionally, the processor 1180 may include at least one processing core. In an embodiment, the processor 1180 may integrate an application processor and a modem processor, where the application processor is mainly responsible for processing the operating system, user interface, and application program; and the modem processor is mainly responsible for performing wireless communication. It may be understood that the modem processor may also not be integrated in the processor 1180.

The terminal 1100 further includes a power supply 1190 (for example, a battery) supplying power for all the components. In an embodiment, the power supply may be logically connected to the processor 1180 by using a power management system, such that such functions as charging management, discharging management, and power consumption management are implemented by using the power management system. The power supply 1190 may further include at least one DC or AC power supply, a recharging system, a power fault detection circuit, a power converter or inverter, a power state indicator, and the like.

Although no detailed illustration is given, the terminal 1100 may further include a camera, a Bluetooth module, and the like, which are not described herein any further. In this embodiment, the display unit of the terminal 1100 is a touch screen display.

In addition to at least one processor 1180, the terminal 1100 further includes a touch screen, a memory, and at least one module, wherein the at least one module is stored in the memory and configured to be executed by the at least one processor. The at least one module has the following functions:
receiving a mark start instruction in a process of recording audio data;
establishing a mark event according to the mark start instruction, and recording a parameter of the mark event, wherein the mark event is used for marking the audio data;
receiving a mark end instruction;
completing recording of the parameter of the mark event according to the mark end instruction to obtain a mark data structure; and
storing the audio data and the mark data structure to obtain an audio file.

Recording a parameter of the mark event includes:
recording an event identifier, an audio identifier and mark start time, the event identifier being used for identifying the mark event, the audio identifier being used for identifying the audio data, the mark start time being used for recording a recording time point of the audio data upon start of marking the mark event.

Completing recording of the parameter of the mark event according to the mark end instruction includes:
recording mark end time, the mark end time being used for recording a recording time point of the audio data upon end of marking the mark event.

Further, if the parameter of the mark event includes a mark type, the method further includes:
acquiring a mark request in the mark start instruction; and
determining the mark type according to the mark request, the mark type including at least one of a key mark and an insertion mark; wherein the key mark is used for marking the to-be-marked audio data determined between the mark start time and the mark end time, and the insertion mark is used for marking a display event of the to-be-marked audio data determined between the mark start time and the mark end time, the display event including displaying predetermined content.

Further, if the mark type indicates an insertion mark, the parameter of the mark event further includes a storage path of the predetermined content, or both a storage path of the predetermined content and a predetermined display duration of the predetermined content.

Further, the parameter of the mark event further includes a mark, wherein the mark is used for describing the mark event.

In conclusion, according to the terminal provided in the embodiments of the present invention, a mark start instruction is received in a process of recording audio data, a mark event is established according to the mark start instruction and a parameter of the mark event is recorded, wherein the mark event is used for marking the audio data; a mark end instruction is received, recording of the parameter of the mark event is completed according to the mark end instruction to obtain a mark data structure, and the audio data and the mark data structure are stored to obtain an audio file. In this way, the problem that the information acquisition efficiency is reduced due to complicated operations of searching for predetermined content in the audio data via repeatedly listening is solved, and the effect of improving the information acquisition efficiency is achieved. In addition, a mark request in the mark start instruction is acquired, a mark type may be determined according to the mark request, and a display event may be marked in the process of recording the audio data. This achieves displaying of the predetermined content in playing the audio data, solves the problem that displayed content in a scenario fails to be represented according to the audio data, and achieves the effect of improving the information acquisition efficiency according to the displayed content.

An embodiment of the present invention provides a terminal. The terminal is applied to implement the playing method according to the above embodiment. The structure of the terminal is the same as that of the terminal as illustrated in FIG. 11, to which please refer. In addition to at least one processor, the terminal further includes a touch screen, a memory, and at least one module, wherein the at least one module is stored in the memory and configured to be executed by the at least one processor. The at least one module has the following functions:
acquiring an audio file, wherein the audio file includes audio data and at least one mark data structure corresponding to the audio data, the mark data structure being used for recording a parameter of a mark event in a process of recording the audio data, the mark event being used for marking the audio data; and
marking the mark event recorded in the at least one mark data structure in a process of playing the audio data.

The mark data structure includes an audio identifier, the audio identifier being used for identifying the audio data; and the acquiring an audio file includes:
acquiring audio data and an audio identifier of the audio data;
searching in the audio identifiers included in the mark data structure for an audio identifier identical to the acquired audio identifier of the audio data; and
acquiring at least one mark data structure to which the searched audio identifier pertains.

The mark data structure includes: an event identifier, mark start time and mark end time; wherein the event identifier is used for identifying the mark event; the mark start time is used for recording a recording time point of the audio data upon start of marking the mark event; and the mark end time is used for recording a recording time point of the audio data upon end of marking the mark event.

Marking the mark event recorded in the at least one mark data structure in a process of playing the audio data includes:
in the process of playing the audio data, determining the mark event according to the event identifier included in the mark data structure for each mark data structure;
determining, according to the mark start time and the mark end time in the determined mark event, to-be-marked audio data; and
marking the to-be-marked audio data.

The mark data structure includes: an event identifier, mark start time and mark end time; wherein the event identifier is used for identifying the mark event; the mark start time is used for recording a recording time point of the audio data upon start of marking the mark event; and the mark end time is used for recording a recording time point of the audio data upon end of marking the mark event.

Marking the mark event recorded in the at least one mark data structure in a process of playing the audio data includes:
in the process of playing the audio data, determining the mark event according to the event identifier included in the mark data structure for each mark data structure;
selecting a mark event from the determined at least one mark event;
determining, according to the mark start time and the mark end time in the selected mark event, to-be-marked audio data; and
jumping to the to-be-marked audio data, and marking the to-be-marked audio data.

Further, the mark data structure further includes a mark type, wherein the mark type includes at least one of a key mark and an insertion mark; wherein the key mark is used for marking the to-be-marked audio data determined between the mark start time and the mark end time, and the insertion mark is used for marking a display event of the to-be-marked audio data determined between the mark start time and the mark end time, the display event including displaying predetermined content.

The method further includes:
reading the mark type.

Marking the to-be-marked audio data includes:
if the read mark type indicates the key mark, giving a particular prompt to the to-be-marked audio data; and
if the read mark type indicates the insertion mark, displaying the predetermined content at predetermined time, the predetermined time being a time between mark end time of a previous mark event and mark start time of a next mark event of the to-be-marked audio data.

Further, the mark data structure further includes a storage path of the predetermined content.

The method further includes:
acquiring the predetermined content according to the storage path.

The mark data structure further includes a predetermined display duration of the predetermined content; in this case, the displaying the predetermined content at predetermined time includes:
backwardly positioning the predetermined display duration based on the predetermined time to obtain first stop time;
if the first stop time is less than the mark start time of the next mark event, displaying the predetermined content from the predetermined time to the first stop time; and
if the first stop time is greater than the mark start time of the next mark event, displaying the predetermined content from the predetermined time to second stop time, the second stop time being greater than the predetermined time but less than or equal to the mark start time of the next mark event.

In an embodiment, the mark data structure further includes a mark, wherein the mark is used for describing the mark event.

The method further includes: reading the mark.

In conclusion, according to the terminal provided in the embodiments of the present invention, an audio file is acquired, wherein the audio file includes audio data and at least one mark data structure corresponding to the audio data, the mark data structure is used for recording a parameter of a mark event in a process of recording the audio data, and the mark event is used for marking the audio data; and the mark event recorded by the at least one mark data structure is marked in the process of playing the audio data. In this way, the problem that the information acquisition efficiency is reduced due to complicated operations of searching for predetermined content in the audio data via repeatedly listening is solved, and the effect of improving the information acquisition efficiency is achieved. In addition, a mark type is read, and if the read mark type indicates an insertion mark, predetermined content is displayed at predetermined time. This achieves displaying of the predetermined content in playing the audio data, solves the problem that displayed content in a scenario fails to be represented according to the audio data, and achieves the effect of improving the information acquisition efficiency according to the displayed content.

Referring to FIG. 12, a structural block diagram of an audio system according to another embodiment of the present invention is given. The audio system includes a recording terminal 1210 and a playing terminal 1220.

The recording terminal 1210 may be the terminal as illustrated in FIG. 6, FIG. 7, or FIG. 11; and the playing terminal 1220 may be the terminal as illustrated in FIG. 8, FIG. 9, FIG. 10, or FIG. 11.

In conclusion, according to the audio system provided in the embodiments of the present invention, a mark start instruction is received in a process of recording audio data, a mark event is established according to the mark start instruction and a parameter of the mark event is recorded, wherein the mark event is used for marking the audio data; a mark end instruction is received, recording of the parameter of the mark event is completed according to the mark end instruction to obtain a mark data structure, and the audio data and the mark data structure are stored to obtain an audio file. In this way, the problem that the information acquisition efficiency is reduced due to complicated operations of searching for predetermined content in the audio data via repeatedly listening is solved, and the effect of improving the information acquisition efficiency is achieved. In addition, a mark request in the mark start instruction is acquired, a mark type may be determined according to the mark request, and a display event may be marked in the process of recording the audio data. This achieves displaying of the predetermined content in playing the audio data, solves the problem that displayed content in a scenario fails to be represented according to the audio data, and achieves the effect of improving the information acquisition efficiency according to the displayed content.

It should be noted that, during recording and playing by the recoding and playing devices according to the above embodiments, the devices are described by only using division of the above functional modules as examples. In practice, the functions may be assigned to different functional modules for implementation as required. To be specific, the internal structures of the recording and playing devices are divided into different functional modules to implement all or part of the above-described functions. In addition, the recording and playing devices according to the above embodiments are based on the same inventive concept as the recording and playing methods according to the embodiments of the present invention. The specific implementation is elaborated in the method embodiments, which is not described herein any further.

The sequence numbers of the preceding embodiments of the present invention are only for ease of description, but do not denote the preference of the embodiments.

Persons of ordinary skill in the art should understand that all or part of steps of the preceding embodiments may be implemented by hardware or hardware following instructions of programs. The programs may be stored in a non-transitory computer-readable storage medium. The storage medium may be a read only memory, a magnetic disk, or a compact disc.

Described above are merely exemplary embodiments of the present invention, but are not intended to limit the present invention. Any modification, equivalent replacement, or improvement made without departing from the spirit and principle of the present invention should fall within the protection scope of the present invention.

## Claims

1. A recording method, **characterized in that** the method comprises:
receiving a mark start instruction in a process of recording audio data;
establishing a mark event according to the mark start instruction, and recording a parameter of the mark event, the mark event being used for marking the audio data;
receiving a mark end instruction;
completing recording of the parameter of the mark event according to the mark end instruction to obtain a mark data structure; and
storing the audio data and the mark data structure to obtain an audio file.

2. The recording method according to claim 1, **characterized in that**:
the recording a parameter of the mark event comprises:
recording an event identifier, an audio identifier and mark start time, the event identifier being used for identifying the mark event, the audio identifier being used for identifying the audio data, the mark start time being used for recording a recording time point of the audio data upon start of marking the mark event; and
the completing recording of the parameter of the mark event according to the mark end instruction comprises:
recording mark end time, the mark end time being used for recording a recording time point of the audio data upon end of marking the mark event.

3. The recording method according to claim 2, **characterized in that** if the parameter of the mark event further comprises a mark type, the method further comprises:
acquiring a mark request in the mark start instruction; and
determining the mark type according to the mark request, the mark type comprising at least one of a key mark and an insertion mark; wherein the key mark is used for marking the to-be-marked audio data determined between the mark start time and the mark end time, and the insertion mark is used for marking a display event of the to-be-marked audio data determined between the mark start time and the mark end time, the display event comprising displaying predetermined content.

4. The recording method according to claim 3, **characterized in that** if the mark type indicates an insertion mark, the parameter of the mark event further comprises a storage path of the predetermined content, or both a storage path of the predetermined content and a predetermined display duration of the predetermined content.

5. The recording method according to any one of claims 2 to 4, **characterized in that** the parameter of the mark event further comprises a mark, the mark being used for describing the mark event.

6. A playing method, **characterized in that** the method comprises:
acquiring an audio file, the audio file comprising audio data and at least one mark data structure corresponding to the audio data, the mark data structure being used for recording a parameter of a mark event in a process of recording the audio data, the mark event being used for marking the audio data; and
marking the mark event recorded in the at least one mark data structure in a process of playing the audio data.

7. The playing method according to claim 6, **characterized in that** the mark data structure comprises an audio identifier, the audio identifier being used for identifying the audio data; and the acquiring an audio file comprises:
acquiring audio data and an audio identifier of the audio data;
searching in the audio identifiers comprised in the mark data structure for an audio identifier identical to the acquired audio identifier of the audio data; and
acquiring at least one mark data structure to which the searched audio identifier pertains.

8. The playing method according to claim 7, **characterized in that** the mark data structure comprises an event identifier, mark start time and mark end time, the event identifier being used for identifying the mark event, the mark start time being used for recording a recording time point of the audio data upon start of marking the mark event, the mark end time being used for recording a recording time point of the audio data upon end of marking the mark event; and
marking the mark event recorded in the at least one mark data structure in a process of playing the audio data comprises:
in the process of playing the audio data, determining the mark event according to the event identifier comprised in the mark data structure for each mark data structure;
determining, according to the mark start time and the mark end time in the determined mark event, to-be-marked audio data; and
marking the to-be-marked audio data.

9. The playing method according to claim 7, **characterized in that** the mark data structure comprises an event identifier, mark start time and mark end time, the event identifier being used for identifying the mark event, the mark start time being used for recording a recording time point of the audio data upon start of marking the mark event, the mark end time being used for recording a recording time point of the audio data upon end of marking the mark event; and
the marking the mark event recorded in the at least one mark data structure in a process of playing the audio data comprises:
in the process of playing the audio data, determining the mark event according to the event identifier comprised in the mark data structure for each mark data structure;
selecting a mark event from the determined at least one mark event; and
determining, according to the mark start time and the mark end time in the selected mark event, to-be-marked audio data; and
jumping to the to-be-marked audio data, and marking the to-be-marked audio data.

10. The playing method according to claim 8 or 9, **characterized in that** the mark data structure further comprises a mark type, the mark type comprising at least one of a key mark and an insertion mark; wherein the key mark is used for marking the to-be-marked audio data determined between the mark start time and the mark end time, and the insertion mark is used for marking a display event of the to-be-marked audio data determined between the mark start time and the mark end time, the display event comprising displaying predetermined content;
the method further comprises: reading the mark type; and
the marking the to-be-marked audio data comprises:
if the read mark type indicates the key mark, giving a particular prompt to the to-be-marked audio data; and
if the read mark type indicates the insertion mark, displaying the predetermined content at predetermined time, the predetermined time being a time between mark end time of a previous mark event and mark start time of a next mark event of the to-be-marked audio data.

11. The playing method according to claim 10, **characterized in that** the mark data structure further comprises a storage path of the predetermined content; and
the method further comprises: acquiring the predetermined content according to the storage path.

12. The playing method according to claim 10 or 11, **characterized in that** the mark data structure further comprises a predetermined display duration of the predetermined content; and the displaying the predetermined content at predetermined time comprises:
backwardly positioning the predetermined display duration based on the predetermined time to obtain first stop time;
if the first stop time is less than the mark start time of the next mark event, displaying the predetermined content from the predetermined time to the first stop time; and
if the first stop time is greater than the mark start time of the next mark event, displaying the predetermined content from the predetermined time to second stop time, the second stop time being greater than the predetermined time but less than or equal to the mark start time of the next mark event.

13. The playing method according to claim 8, **characterized in that** the mark data structure further comprises a mark, the mark being used for describing the mark event; and
the method further comprises: reading the mark.

14. A recording device, **characterized in that** the device comprises:
a first receiving module, configured to receive a mark start instruction in a process of recording audio data;
a recording module, configured to establish a mark event according to the mark start instruction received by the first receiving module, and record a parameter of the mark event, the mark event being used for marking the audio data;
a second receiving module, configured to receive a mark end instruction after the recording module establishes the mark event according to the mark start instruction and records the parameter of the mark event;
a first generating module, configured to complete recording of the parameter of the mark event according to the mark end instruction received by the second receiving module to obtain a mark data structure; and
a second generating module, configured to store the audio data and the mark data structure generated by the first generating module to obtain an audio file.

15. The recording device according to claim 14, **characterized in that**:
the recording module is configured to record an event identifier, an audio identifier and mark start time, the event identifier being used for identifying the mark event, the audio identifier being used for identifying the audio data, the mark start time being used for recording a recording time point of the audio data upon start of marking the mark event; and
the second generating module is configured to record mark end time, the mark end time being used for recording a recording time point of the audio data upon end of marking the mark event.

16. The recording device according to claim 15, **characterized in that** if the parameter of the mark event further comprises a mark type, the device further comprises:
a first acquiring module, configured to acquire a mark request in the mark start instruction; and
a determining module, configured to determine the mark type according to the mark request acquired by the first acquiring module, the mark type comprising at least one of a key mark and an insertion mark; wherein the key mark is used for marking the to-be-marked audio data determined between the mark start time and the mark end time, and the insertion mark is used for marking a display event of the to-be-marked audio data determined between the mark start time and the mark end time, the display event comprising displaying predetermined content.

17. The recording device according to claim 16, **characterized in that** if the mark type indicates an insertion mark, the parameter of the mark event further comprises a storage path of the predetermined content, or both a storage path of the predetermined content and a predetermined display duration of the predetermined content.

18. The recording device according to any one of claims 15 to 17, **characterized in that** the parameter of the mark event further comprises a mark, the mark being used for describing the mark event.

19. A playing device, **characterized in that** the device comprises:
a second acquiring module, configured to acquire an audio file, the audio file comprising audio data and at least one mark data structure corresponding to the audio data, the mark data structure being used for recording a parameter of a mark event in a process of recording the audio data, the mark event being used for marking the audio data; and
a marking module, configured to mark the mark event recorded in the at least one mark data structure in a process of playing the audio data acquired by the second acquiring module.

20. The playing device according to claim 19, **characterized in that** the mark data structure comprises an audio identifier, the audio identifier being used for identifying the audio data; and the second acquiring module comprises:
a first acquiring unit, configured to acquire audio data and an audio identifier of the audio data;
a searching unit, configured to search in the audio identifiers comprised in the mark data structure for an audio identifier identical to the audio identifier of the audio data acquired by the first acquiring unit; and
a second acquiring unit, configured to acquire at least one mark data structure to which the audio identifier searched out by the searching unit pertains.

21. The playing device according to claim 20, **characterized in that** the mark data structure comprises an event identifier, mark start time and mark end time, the event identifier being used for identifying the mark event, the mark start time being used for recording a recording time point of the audio data upon start of marking the mark event, the mark end time being used for recording a recording time point of the audio data upon end of marking the mark event; and
the marking module comprises:
a first determining unit, configured to, in the process of playing the audio data, determine the mark event according to the event identifier comprised in the mark data structure for each mark data structure;
a second determining unit, configured to determine, according to the mark start time and the mark end time in the mark event determined by the first determining unit, to-be-marked audio data; and
a marking unit, configured to mark the to-be-marked audio data determined by the second determining unit.

22. The playing device according to claim 20, **characterized in that** the mark data structure comprises an event identifier, mark start time and mark end time, the event identifier being used for identifying the mark event, the mark start time being used for recording a recording time point of the audio data upon start of marking the mark event, the mark end time being used for recording a recording time point of the audio data upon end of marking the mark event; and
the marking module comprises:
a third determining unit, configured to, in the process of playing the audio data, determine the mark event according to the event identifier comprised in the mark data structure for each mark data structure;
a selecting unit, configured to select a mark event from the at least one mark event determined by the third determining unit; and
a fourth determining unit, configured to determine, according to the mark start time and the mark end time in the mark event selected by the selecting unit, to-be-marked audio data; and
the marking unit is further configured to jump to the to-be-marked audio data determined by the fourth determining unit, and mark the to-be-marked audio data.

23. The playing device according to claim 21 or 22, **characterized in that** the mark data structure further comprises a mark type, the mark type comprising at least one of a key mark and an insertion mark; wherein the key mark is used for marking the to-be-marked audio data determined between the mark start time and the mark end time, and the insertion mark is used for marking a display event of the to-be-marked audio data determined between the mark start time and the mark end time, the display event comprising displaying predetermined content;
the device further comprises:
a first reading module, configured to read the mark type;
the marking unit comprises:
a prompting subunit, configured to, if the mark type read by the first reading module indicates the key mark, give a particular prompt to the to-be-marked audio data; and
a displaying subunit, configured to, if the mark type read by the first reading module indicates the insertion mark, display the predetermined content at predetermined time, the predetermined time being a time between mark end time of a previous mark event and mark start time of a next mark event of the to-be-marked audio data.

24. The playing device according to claim 23, **characterized in that** the mark data structure further comprises a storage path of the predetermined content; and
the device further comprises:
a third acquiring module, configured to acquire the predetermined content according to the storage path.

25. The playing device according to claim 23 or 24, **characterized in that** the mark data structure further comprises a predetermined display duration of the predetermined content; the displaying subunit is configured to: backwardly position the predetermined display duration based on the predetermined time to obtain first stop time; if the first stop time is less than the mark start time of the next mark event, display the predetermined content from the predetermined time to the first stop time; and if the first stop time is greater than the mark start time of the next mark event, display the predetermined content from the predetermined time to second stop time, the second stop time being greater than the predetermined time but less than or equal to the mark start time of the next mark event.

26. The playing device according to claim 21, **characterized in that** the mark data structure further comprises a mark, the mark being used for describing the mark event; and
the device further comprises:
a second reading module, configured to read the mark.

27. A recording terminal, **characterized in that** the recording terminal comprises a recording device according to any one of claims 14 to 18.

28. A playing terminal, **characterized in that** the playing terminal comprises a playing device according to any one of claims 19 to 26.

29. An audio system, **characterized in that** the audio system comprises a recording terminal according to claim 27 and a playing terminal according to claim 28.

30. An audio file, **characterized in that**:
the audio file comprises audio data and at least one mark data structure corresponding to the audio data, the mark data structure being used for recording a parameter of a mark event corresponding to the audio data, the mark event being used for marking the audio data.

31. The audio file according to claim 30, **characterized in that** the mark data structure comprises: an event identifier, an audio identifier, mark start time and mark end time; wherein
the event identifier is used for identifying the mark event;
the audio identifier is used for identifying the audio data;
the mark start time is used for recording a start time point of the mark event; and
the mark end time is used for recording an end time point of the mark event.

32. The audio file according to claim 31, **characterized in that** the mark data structure further comprises a mark type, the mark type comprising at least one of a key mark and an insertion mark; wherein
the key mark is used for marking the to-be-marked audio data determined between the mark start time and the mark end time; and
the insertion mark is used for marking a display event of the to-be-marked audio data determined between the mark start time and the mark end time, the display event comprising displaying predetermined content.

33. The audio file according to claim 32, **characterized in that** if the mark type indicates an insertion mark, the mark data structure further comprises a storage path of the predetermined content, or both a storage path of the predetermined content and a predetermined display duration of the predetermined content.

34. The audio file according to any one of claims 30 to 33, **characterized in that** the mark data structure further comprises a mark, the mark being used for describing the mark event.
